# EUROPEAN PATENT SPECIFICATION

(11) **EP 1 517 503 B1**
(45) Date of publication and mention of the grant of the patent: **24.05.2006**
(21) Application number: 03021377.1
(22) Date of filing: 22.09.2003
(51) Int. Cl.: H04L 29/06

(54) **Method, device and system for distributing media channels over a communication network**
Verfahren, Vorrichtung und System zur Verteilung von Mediakanälen über einem Kommunikationsnetz
Procédé, dispositif et système de distribution des canaux-supports sur un réseau de transmission

(43) Date of publication of application: 23.03.2005
(73) Proprietor: Telekom Slovenije d.d., 1000 Ljubljana (SI)
(72) Inventor: Turk, Matevz, 1000 Ljubljana (SI); Pracek, Pavel, 1000 Ljubljana (SI); Zrimsek, Joze, 1290 Grosuplje (SI)
(74) Representative: Becker Kurig Straus

(56) References cited:
- US-A1- 2002 116 707
- US-A1- 2002 188 953
- MERRIMAN P: "Video over DSL architecture" ALCATEL TELECOMMUNICATIONS REVIEW, ALCATEL, PARIS CEDEX, FR, 2000, pages 250-257, XP007005392 ISSN: 1267-7167

## Description

The present invention relates to a method, and a system for distributing media channels such as tv channels over an electronic communication network such as the internet. More particularly it relates to a system for distributing media channels without diminishing the image quality of the media channels. The article "Video over DSL architecture" by P. Meriman discloses a scheme for distributing video over DSL lines. US 2002/0188953 discloses systems and methods for delivering digital aggregated broadcast television programming. US 2002/011 6707 A1 discloses a client system and method for real-time rendering of digital content from a network.

The article "Video over DSL architecture" by P. Merriman discloses a scheme for distributing video over DSL lines..

Us 2002/0188953 discloses systems and methods for delivering digital aggregated broadcast television programming.

Us 2002/0116707 A1 discloses a client system and method for real-time rendering of digital content from a network.

Network connections with a high available bandwidth have become available to end users lately, the most prominent of those are digital subscriber line (DSL) connections. Usually asymmetric (ADSL) connections are used, wherein the upstream bandwidth and the downstream bandwidth are different, with smaller upstream than downstream bandwidth. These connections are conventionally used for internet access.

Satellite tv channels may be separated into two main categories. First there are so-called free-to-air programs (FTA), which are not encrypted. Second there are encrypted programs or pay-tv channels, respectively. The latter may be encrypted using various methods and are only to be received in decrypted form by subscribers of specific pay-tv service providers. According to the DVB (Digital Video Broadcasting) standard, of course both kinds of digital programs are accordingly encoded, but can be decoded by any DVB compliant device (receiver or set top box), while pay-tv channels additionally have to be decrypted with specific means by subscribed users.

Analog media channels have to be digitized first, after which the same arguments apply to the generated digital streams. All descriptions made before and those that are to be made further on apply correspondingly to media channels also received by either cable or terrestrial feeds.

To distribute digital media channels over a network, the corresponding digital streams are conventionally reduced in their bit rate. Thus the quality is of course reduced accordingly.

So obviously the need for a system and method for distributing a plurality of media channels over a network without diminishing their quality exists.

An object of the present invention is to provide a method and a system for the distribution of a number of media channels over an ADSL network without diminishing the quality of the corresponding video streams wherever possible. A further object of the invention is to provide customer internet equipment (CPE) also called set top box (STB) with a user surface software to run thereon to operate the tv channel viewed.

The aforementioned objects of the invention are achieved by methods of claims 1 and 6 and a system of claim 10, and a computer readable medium of claim 7 and a computer program product of claim 8, and a signal of claim 9. A system is provided which is enabled to distribute a theoretically unlimited number of media channels over a network without the need for reprocessing/bit rate compression for the majority of channels. Thus the original quality of almost all channels is preserved. A method is provided to split up a conventional physical DSL network connection into two logical interfaces, while one of those two interfaces is reserved for tv channel distribution, whereas the other interface maintains a conventional internet connection. Customer premise equipment (CPE) is provided by the invention, which is enabled to operate the tv channel viewed by a provided user surface. The user surface is downloaded from a web server in a conventional manner at boot time of the set top box, whereas no further communication to the server is then needed.

A method is preferred wherein said digital video input signal is derived by digitally encoding an analog video input signal. That way analog signals can be encoded to be handled accordingly.

A method is preferred wherein the bandwidth of said digital video input signal is reduced. This may be necessary for channels with a bandwidth exceeding the maximum bandwidth of the network they are to be distributed with.

It is preferred that the aforementioned method also comprises the steps of receiving a digital video input signal and repacketizing said digital video input signal into an internet protocol video signal.

It is preferred that the network connection is a digital subscriber line connection.

A system is preferred also comprising a component for digitally encoding an analog video input signal.

A system is preferred which comprises a component for reducing the bandwidth of said digital video input signal.

A system is preferred, wherein said network is a digital subscriber line network.

A system is preferred, comprising a plurality of said receiver devices and a re-multiplexer for combining the video output signals of said plurality of receiver devices.

A system is preferred which also comprises a client device as mentioned before.

A main part of the tv distribution system is a video relay device which is enabled to repacketize common MPEG-2 digital video streams into an internet protocol video signal. The video streams are fed into the video relay device by at least one integrated receiver device (IRD), which is able to receive satellite tv channels, both free-to-air and encrypted pay-tv channels, and decrypt encrypted programs if needed. Also other feeds, like analog terrestrial or cable feeds, may be encoded by another component into a digital video stream, after which they are handled accordingly. The IRD then outputs a standard DVB-ASI (Digital Video Broadcast Asynchronous Serial Interface) signal and passes it on to the video relay device. Feeds from several satellite transponders may previously be statistically re-multiplexed by a re-multiplexer device, in order to reduce the channel cost-per-port. Only the few channels whose bit rate exceeds the maximum bandwidth of the network connection over which they are to be distributed are processed by a bit rate compressor to lower their bit rate accordingly. This applies only to rather few tv programs, mainly sport channels and the like, while the vast majority of channels is not reprocessed.

The repacketized internet protocol video signals are then distributed via a broadband remote access server (B-RAS), which is connected to a customer over a standard ADSL line. On the physical interface of the DSL line two logical interfaces are established. While one of those serves as a conventional internet connection, with assigned public internet protocol address, the other logical interface is utilized for the distribution of the tv channels, using a predetermined internet protocol address.

For that purpose the customer premise equipment, a receiver or so-called set top box (STB), is used on the customers end of the DSL connection. The STB may easily be connected to the DSL modem in a known manner through a switch or the like, parallel to a computer for internet access. The STB comprises a built-in fixed private IP address. Using this address, a connection over the logical tv channel interface is established with the B-RAS for the tv distribution. To improve security, firewalls may be used in a known manner, on either side of this connection. Quality of service (QoS) has to be implemented on the side of the B-RAS server, in order to give higher priority to the internet protocol packets belonging to the tv distribution. This is necessary to prevent other internet protocol packets, belonging to the users normal internet connection, from disturbing the distribution of the video data stream.

At boot time of the STB a user surface is downloaded from a web server. The STB receives also program code to operate the tv channel viewed. No further communication with the web server is then needed. The user surface provides a complete TV channel guide. Thus it provides a complete operation surface for the user to control the set top box, e.g. change the channel and the like. The set top box is enabled to pick up internet protocol video signals from a network without any further server communication.

The data rate of conventional digital satellite (DVB-S) tv channels usually ranges from 3,5 to 5 Mbit/s. Such tv programs can be fed into a DSL line which has a maximum bandwidth of 8 Mbit/s without reprocessing, i.e. bit rate compression. The tv channels can be repacketized into internet protocol video signals, which can directly be picked up be the users set top box without communication to a server. In this manner, no reduction of the bit rate, i.e. further compression, is required, so the original quality of the video stream can be preserved. Conventional methods make use of such reprocessing in order to reduce the bit rates, though this of course affects the image quality of the video stream. Only the few channels with higher bit rates, such as sport channels or the like, may require to reduce the bit rate in the present invention. Usually there are no such channels which consume the total bandwidth of about 8 Mbit/s that is the highest available bandwidth on DSL connections, at least not for considerable intervals of time, but just for short burst peaks. So the available bandwidth is almost all of the time sufficient for the digital video stream while the spare bandwidth also satisfies the users internet bandwidth requests.

The content of digital signals such as video streams may be transmitted using different protocols. While the video content remains unchanged, the actual form of the signal containing the video signal may vary. For example lossless compression of course changes the form of the data stream, while the content remains intact. A process that is referred to as repacketizing serves to translate data streams between different transmission protocols, though not altering the information content of the data stream. In the present invention, repacketizing means that a conventional MPEG-2 video stream is converted into an internet protocol video signal, containing the original video data unaltered. Thus the digital video signal received e.g. from a satellite transponder may be transmitted over a DSL internet connection without loss of image quality.

According to a preferred embodiment a signal arrives at the device from an antenna, e.g. a satellite or terrestrial antenna, the signal is processed in IRD, where decryption of either digital or analog signal is taking place, the decrypted signal along with other signals is forwarded to a video concentrator (VC), while in the VC two processes are taking place simultaneously. The digital signals are demultiplexed into IP packets (e.g. of MPEG-2 format) and the analog signals are digitized into IP packets (e.g. of MPEG-2 format). Subsequently, both types of signals proceed to a motherboard, wherein the IP packets are inserted into the data stream.

Further features, advantages and applications of the present invention may be derived from the following description of preferred embodiment taken in conjunction with the attached drawings wherein
Figure 1 illustrates a first embodiment of a tv distribution system according to the invention;
Figure 2 illustrates a second embodiment of a tv distribution system according to the invention;
Figure 3 illustrates a third embodiment of a tv distribution system according to the invention;
Figure 4 is a schematic diagram of a preferred embodiment of the invention; and
Figure 5 illustrates the configuration of the embodiment of the invention of figure 4 on the customers side.

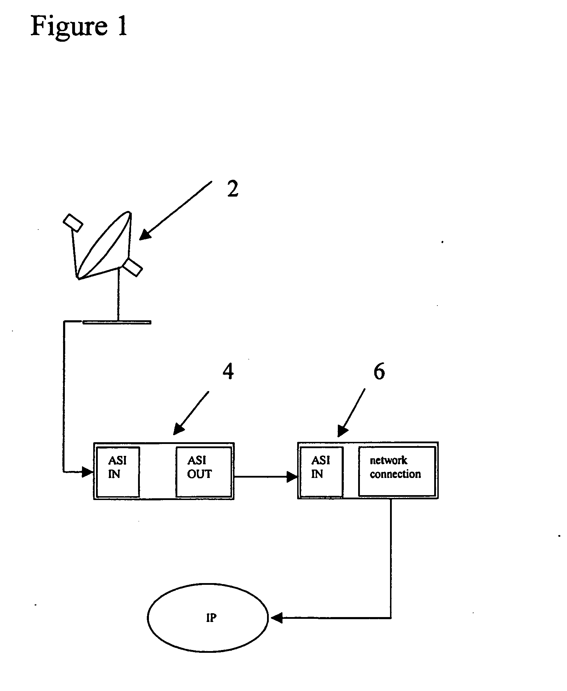

In figure 1 a first embodiment is illustrated. The signal of a satellite antenna 2 is fed into an asynchronous serial interface (ASI) input of an integrated receiver device (IRD) 4 which handles the data stream. In this embodiment, the IRD 4 decrypts a single tv channel. Though the corresponding ASI output the full feed of all channels received through the satellite antenna 2 including the one decrypted channel is fed into a video relay device 6. Through an conventional ethernet output the video stream of the decoded channel - and of any free-to-air (FTA) channels contained in the satellite signal, for which redistribution right have been granted - is then passed on to an IP network.

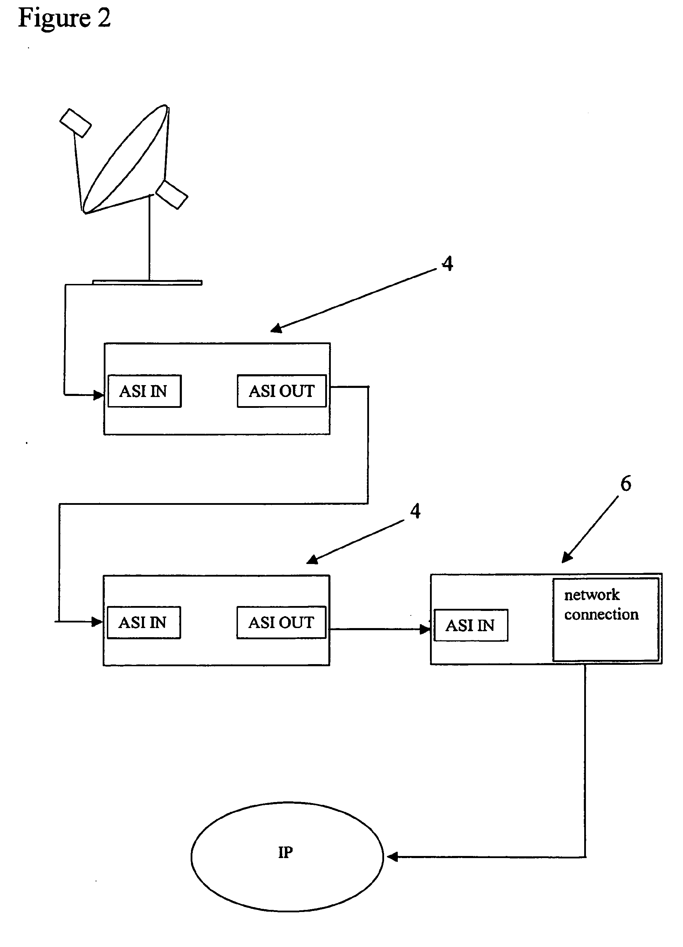

In figure 2 a second embodiment is illustrated. Here an approach of cascaded IRDs 4 is shown. According to figure 1, each single IRD 4 decrypts precisely one encrypted channel. It then passes on all the channels, those that were decrypted earlier in the chain, the channel it decrypted itself, and any FTA-channel on to the next IRD 4. The last IRD 4 in that chain passes the whole feed to the video relay device 6, according to figure 1.

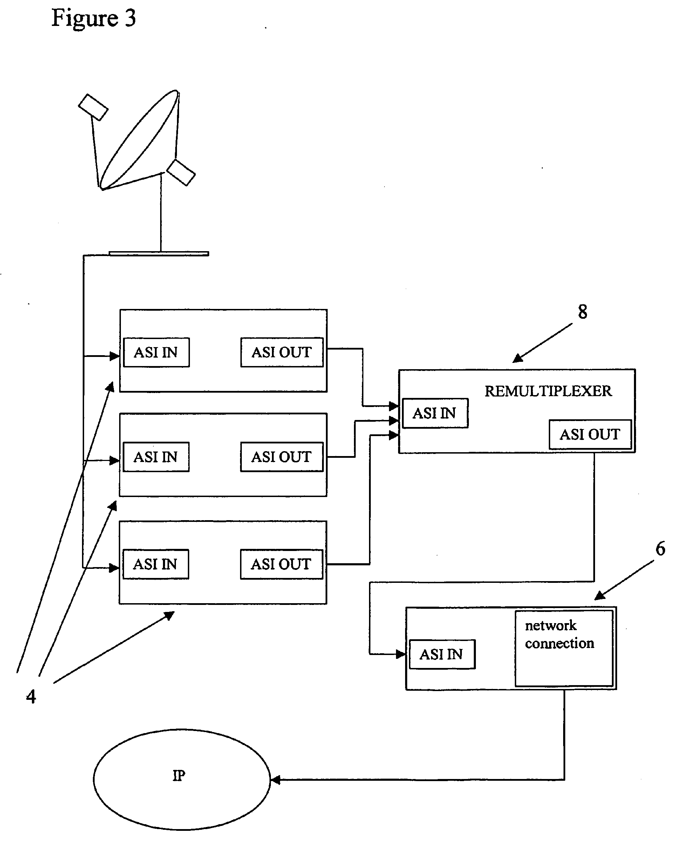

In figure 3 a third embodiment is illustrated. The approach shown here is to combine feeds of several satellite transponders into a single multiplexed feed. According to embodiments 1 and 2 of figures 1 and 2 the satellite signal is fed into one of three IRDs 4, respectively. The output feeds from the IRDs 4 are then fed into a re-multiplexer 8, which combines them and passes the combined feed on to the video relay device 6, where it is relayed into the IP network.

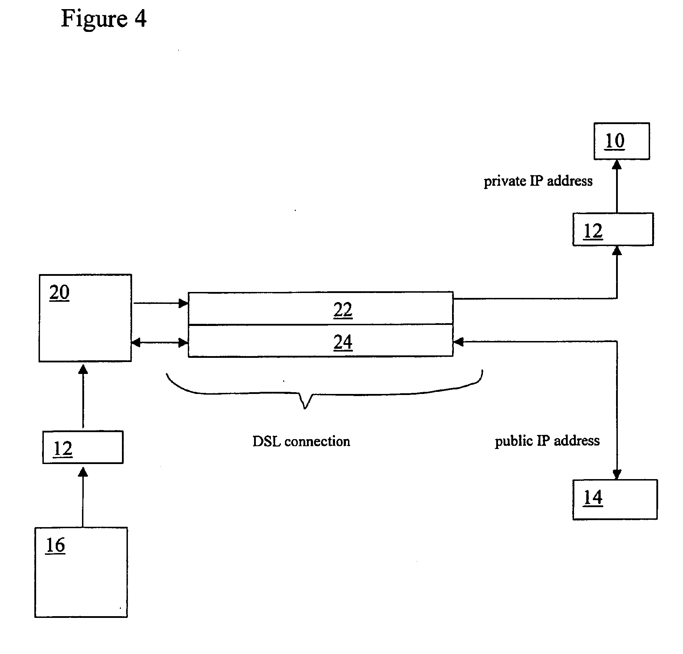

In figure 4 a schematic diagram of a tv distribution network according to the invention is shown. On the server side a port of a tv distribution system is connected to a broadband remote access server (B-RAS) 20 via a conventional firewall 12. A DSL connection is established between the B-RAS 20 and the customer or subscriber. The physical DSL connection is split up into two logical interfaces. The first interface 22 serves for distributing the digital video stream, while the other interface 24 is a conventional internet connection. The logical interface for the media channels 22 uses a fixed private internet protocol or IP address, which is built into a set top box (STB) 10. The set top box 10 is connected via the logical interface 22 with the tv distribution network 16, here also shown with a firewall 12 to improve security. Additionally, access lists on the B-RAS 20 prevent unauthorized access to the customer premise equipment or set top box 10. When the set top box 10 performs its boot-up procedure, it downloads a user surface from a web server (either the B-RAS 20 itself or a conventional web server on the internet (not shown)). Also program codes are received to enable the STB 10 to operate the tv channel actually viewed. After having received both user surface program and necessary program codes no further communication with a web server is needed.

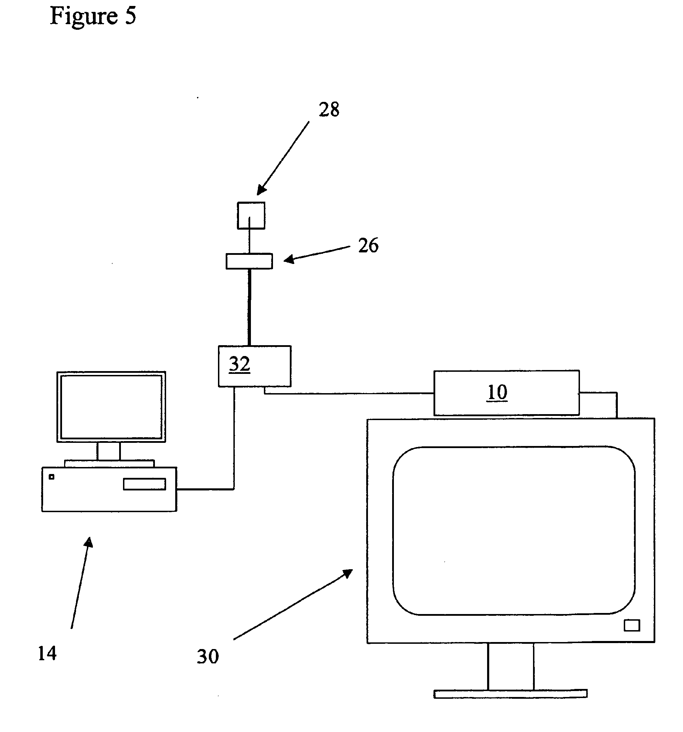

In figure 5 the physical configuration of the devices used for an embodiment of the invention according to figure 4 on the customers side of the tv distribution network is shown. A tv set 30, connected with a set top box 10, a conventional computer 14 and a conventional network switch 32 are shown. A conventional DSL modem 26 is utilized to establish the DSL connection through a DSL-line 28. Through the switch 32 the connection is then shared between the computer 14 and the set top box 10. The latter is connected to the tv set 30 to actually display the received tv channel, i.e. utilizing an integrated D/A converter to generate an analog video signal suitable for a standard tv set from the digital video signal received. The computer 14 and the set top box 10 are connected to the DSL-line 28 through the switch 32 and the modem 26. While the computer 14 is connected to the internet in a known manner, also a video data stream is received over the DSL-line 28 by the set top box 10. By utilizing a switch 32 it is ensured that both operation of the computer 14, to allow the user conventional internet access, and of the set top box 10, to provide the video data stream to the tv set 30, is possible at the same time without disturbances.

## Claims

1. A method for distributing media channels over a digital subscriber line DSL network connection, comprising the steps:
- receiving an internet protocol video signal;
- establishing a first logical interface (22) in a physical digital subscriber line DSL network connection using a predetermined private internet protocol address;
- establishing a second logical interface (24) in said physical digital subscriber line DSL network connection using a public internet protocol address for maintaining an Internet connection using said public internet protocol address;
- sending said internet protocol video signal to said predetermined private internet protocol address over said physical digital subscriber line DSL network connection.

2. Method according to claim 1, wherein said receiving step is preceded by:
- receiving a digital video input signal;
- repacketizing said digital video input signal into an internet protocol video signal; and
- passing said internet protocol video signal on to an IP network.

3. Method according to claim 2, further comprising:
- reducing the bandwidth of said digital video input signal.

4. Method according to claim 1 or 2, wherein said digital video input signal is derived by digitally encoding an analog video input signal.

5. Method according to anyone of claims 2 to 4, further comprising:
- decrypting said digital video input signal or said analog video input signal.

6. Method for receiving media channels distributed over a digital subscriber line DSL network connection, comprising:
- establishing a first logical interface (22) in a physical digital subscriber line DSL network connection using a fixed private internet protocol address;
- establishing a second logical interface (24) in said physical digital subscriber line DSL network connection using a public internet protocol address for maintaining an Internet connection via said public internet protocol address;
- receiving an internet protocol video signal via said first logical interface (22); and
- digital/analog D/A converting said internet protocol video signal into an output video signal suitable to be displayed by a TV set.

7. Computer readable medium comprising program code means stored thereon for carrying out the method of anyone of claims 1 to 6 when said computer program product is run on a computer or network device.

8. Computer program product comprising program code, downloadable from a server for carrying out the method of anyone of claims 1 to 6 when said computer program product is run on a computer or network device.

9. Signal comprising a carrier wave carrying a Computer data signal representing a program that instructs a computer to perform the steps of the method of anyone of claims 1 to 6.

10. System for distributing media channels over a digital subscriber line DSL network, comprising:
- a component for receiving an internet protocol video signal;
- a server (20) connectable to a digital subscriber lin DSL network;
- a first logical interface (22) established for a connection through said digital subscriber line DSL network using a predetermined private internet protocol address;
- a second logical interface (24) established for a connection through said digital subscriber line DSL network connection using a public internet protocol address, said second logical interface (24) being adapted for maintaining an Internet connection via said public internet protocol address; and
- a transmitting component for sending said internet protocol video signal to said fixed private internet protocol address over said physical digital subscriber line DSL network connection.

11. System according to claim 10, further comprising:
- a receiver device (4) for receiving a digital video input signal;
- a video relay device (6) for repacketizing said digital video input signal into an internet protocol video signal; and
- a component for passing said internet protocol video signal on to an IP network.

12. System according to claim 11, further comprising:
- a component for reducing the bandwidth of said digital video input signal.

13. System according to claim 11 or 12, further comprising:
- a component for digitally encoding an analog video input signal to derive said digital video input signal.

14. System according to anyone of claims 11 to 13, further comprising:
- a component for decrypting said digital video input signal or said analog video input signal.

## Patentansprüche

1. Verfahren zur Verteilung von Medien-Kanälen über eine digitale Teilnehmeranschlussleitung-Netzverbindung, welches die Schritte umfasst:
- Empfangen eines Internetprotokoll-Videosignals;
- Einrichten eines ersten logischen Interfaces (22) in einer physikalischen, digitalen Teilnehmeranschlussleitung-Netzverbindung unter Verwendung einer vorbestimmten privaten Internetprotokoll-Addresse;
- Einrichten eines zweiten logischen Interfaces (24) in der physikalischen, digitalen Teilnehmeranschlussleitung-Netzverbindung unter Verwendung einer öffentlichen Internetprotokoll-Adresse, um eine Internetverbindung unter Verwendung der öffentlichen Internetprotokoll-Adresse aufrecht zu erhalten;
- Senden des Internetprotokoll-Videosignals an die vorbestimmte private Internetprotokoll-Adresse über die physikalischen, digitale Teilnehmeranschlussleitung-Netzverbindung.

2. Verfahren nach Anspruch 1, wobei vor dem Schritt des Empfangens abläuft:
- Empfangen eines digitalen Video-Inputsignals;
- erneutes Bündeln des digitalen Video-Inputsignals in ein Intemetprotokoll-Videosignal; und
- Übertragen des Internetprotokoll-Videosignals an ein IP-Netzwerk.

3. Verfahren nach Anspruch 2, weiter umfassend:
- Reduzieren der Bandbreite des digitalen Video-Inputsignals.

4. Verfahren nach Anspruch 1 oder 2, wobei das digitale Video-Inputsignal durch digitales Codieren eines analogen Video-Inputsignals abgeleitet ist.

5. Verfahren nach einem der Ansprüche 2 bis 4, weiter umfassend:
- Entschlüsseln des digitalen Video-Inputsignals oder des analogen Video-Inputsignals.

6. Verfahren zum Erhalt von Medien-Kanälen, welche über eine digitale Teilnehmeranschlussleitung-Netzverbindung verteilt werden, umfassend:
- Einrichten eines ersten logischen Interfaces (22) in einer physikalischen digitalen Teilnehmeranschlussleitung-Netzverbindung unter Verwendung einer vorbestimmten privaten Internetprotokoll-Addresse;
- Einrichten eines zweiten logischen Interfaces (24) in der physikalischen digitalen Teilnehmeranschlussleitung-Netzverbindung unter Verwendung einer öffentlichen Internetprotokolladdresse, um über die öffentliche Internetprotokolladdresse eine Internetverbindung aufrecht zu erhalten;
- Empfangen eines Internetprotokoll-Videosignals über die erste logische Anschlussstelle (22); und
- Digital-Analog-Umwandeln des Internetprotokoll-Videosignals in ein Output-Videosignal, das von einem TV-Gerät angezeigt werden kann.

7. Computer lesbares Medium, welches darauf gespeicherte Programmcode-Mittel umfasst, um das Verfahren nach einem der Ansprüche 1 bis 6 durchzuführen, wenn das Computerprogramm-Produkt auf einem Computer oder einem Netzwerk ausgeführt wird.

8. Computerprogramm-Produkt, welches einen von einem Server herunterladbaren Programmcode zur Ausführung des Verfahrens nach einem der Ansprüche 1 bis 6, wenn das Computerprogramm-Produkt auf einem Computer oder Netzwerk ausgeführt wird, umfasst.

9. Signal, welches eine Trägerwelle umfasst, die ein Computer-Datensignal trägt, das ein Programm darstellt, das einen Computer dazu bringt, die Schritte des Verfahren nach einem der Ansprüche 1 bis 6 durchzuführen.

10. System zur Verteilung von Medienkanälen über eine digitale Teilnehmeranschlussleitung-Netzverbindung, umfassend:
- eine Komponente zum Empfangen eines Internetprotokoll-Videosignals:
- einen Server (20), der mit einem digitalen Teilnehmeranschiussleitungs-Netzwerk verbunden werden kann;
- ein erstes logisches Interface (22), das für eine Verbindung über das digitale Teilnehmeranschlussleitungs-Netzwerk unter Verwendung einer vorbestimmten privaten Internetprotokoll-Addresse eingerichtet ist;
- ein zweites logisches Interface (24), das für eine Verbindung über das digitale Teilnehmeranschlussleitungs-Netzwerk unter Verwendung einer öffentlichen Internetprotokoll-Addresse eingerichtet ist, wobei das zweite logische Interface (24) angepasst ist, um über die öffentliche Internetprotokoll-Addresse eine Internetverbindung aufrecht zu halten; und
- eine Übertragungskomponente zum Senden des Internetprotokoll-Videosignals an die vorbestimmte private Internetprotokoll-Addresse über die physikalische digitale Teilnehmeranschlussleitung-Netzverbindung.

11. System nach Anspruch 10, weiter umfassend:
- eine Receiver-Einrichtung (4) zum Empfangen eines digitalen Video-Inputsignals;
- eine Videorelais-Einrichtung (6) zur erneuten Bündelung des digitalen Video-Inputsignals in ein Internetprotokoll-Videosignal; und
- eine Komponente zur Übertragung des Internetprotokoll-Videosignals an ein IP-Netzwerk.

12. System nach Anspruch 11, weiter umfassend:
- eine Komponente zur Reduzierung der Bandbreite des digitalen Video-Inputsignals.

13. System nach Anspruch 11 oder 12, weiter umfassend:
- eine Komponente zur digitalen Codierung eines analogen Video-Inputsignals, um das digitale Video-Inputsignal abzuleiten.

14. System nach einem der Ansprüche 11 bis 13, weiter umfassend:
- eine Komponente zur Entschlüsselung des digitalen Video-Inputsignals oder des analogen Video-Inputsignals.

## Revendications

1. Une méthode pour distribuer des canaux supports sur une connexion de réseau de ligne numérique de souscripteur DSL comprenant les étapes de :
- recevoir un signal visuel de protocole internet ;
- établir une première interface logique (22) dans une connexion de réseau de ligne numérique de souscripteur DSL physique utilisant une adresse privée de protocole internet prédéterminée ;
- établir une seconde interface logique (24) dans ladite connexion de réseau de ligne numérique de souscripteur DSL physique en utilisant une adresse publique de protocole internet pour maintenir une connexion Internet utilisant ladite adresse publique de protocole internet ;
- envoyer ledit signal visuel de protocole internet à ladite adresse privée de protocole internet prédéterminée par la connexion de réseau de ligne numérique de souscripteur DSL physique.

2. Méthode selon la revendication 1 dans laquelle ladite étape de réception est précédée par :
- recevoir un signal visuel numérique entrant ;
- repaquetter ledit signal visuel numérique entrant en un signal visuel de protocole internet ; et
- passer ledit signal visuel de protocole internet sur un réseau IP.

3. Méthode selon la revendication 2 comprenant en outre :
- réduire la largeur de bande dudit signal visuel numérique entrant.

4. Méthode selon la revendication 1 ou 2 dans laquelle ledit signal visuel numérique entrant est dérivé par codage numérique d'un signal visuel analogique entrant.

5. Méthode selon l'une quelconque des revendications 2 à 4 comprenant en outre :
- décrypter ledit signal visuel numérique entrant ou ledit signal visuel analogique entrant.

6. Méthode pour recevoir des canaux supports distribués par une connexion de réseau de ligne numérique de souscripteur DSL comprenant les étapes de :
- établir une première interface logique (22) dans une connexion physique de réseau de ligne numérique de souscripteur DSL utilisant une adresse privée de protocole internet prédéterminée ;
- établir une seconde interface logique (24) dans ladite connexion physique de réseau de ligne numérique de souscripteur DSL utilisant une adresse publique de protocole internet pour maintenir une connexion Internet utilisant ladite adresse publique de protocole internet ;
- recevoir un signal visuel de protocole internet au moyen de ladite première interface logique (22) ; et
- convertir en numérique/analogique D/A ledit signal visuel de protocole internet en un signal visuel sortant convenant pour être affiché par un appareil TV.

7. Support lisible par ordinateur comprenant des éléments de code de programme mémorisés pour mettre en oeuvre la méthode selon l'une quelconque des revendications 1 à 6 lorsque le produit de programme d'ordinateur est exécuté par un ordinateur ou par un dispositif en réseau.

8. Produit de programme d'ordinateur comprenant un code de programme chargeable à partir d'un serveur pour mettre en oeuvre la méthode selon l'une quelconque des revendications 1 à 6 lorsque ledit produit de programme d'ordinateur est exécuté par un ordinateur ou par un dispositif en réseau.

9. Signal comprenant une onde porteuse portant un signal de donnée d'ordinateur représentant un programme instruisant un ordinateur d'effectuer les étapes de la méthode selon l'une quelconque des revendications 1 à 6.

10. Système pour distribuer des canaux supports par une connexion de réseau de ligne numérique de souscripteur DSL comprenant :
- un composant pour recevoir un signal visuel de protocole internet ;
- un serveur (20) connectable à un réseau de ligne numérique de souscripteur DSL ;
- une première interface logique (22) établie pour une connexion par ledit réseau de ligne numérique de souscripteur DSL utilisant une adresse privée de protocole internet prédéterminée ;
- une seconde interface logique (24) établie pour une connexion par ladite connexion de réseau de ligne numérique de souscripteur DSL utilisant une adresse publique de protocole internet, ladite seconde interface logique (24) étant adaptée pour maintenir une connexion Internet utilisant ladite adresse publique de protocole internet ; et
- un composant de transmission pour envoyer ledit signal visuel de protocole internet à ladite adresse privée de protocole interne fixe par ladite connexion physique de réseau de ligne numérique de souscripteur DSL.

11. Système selon la revendication 10 comprenant en outre :
- un dispositif récepteur (4) pour recevoir un signal visuel numérique entrant ;
- un dispositif de relais visuel (6) pour repaquetter ledit signal visuel numérique entrant en un signal visuel de protocole internet ; et
- un composant pour passer ledit signal visuel de protocole internet sur un réseau IP.

12. Système selon la revendication 11 comprenant en outre :
- un composant pour réduire la largeur de bande dudit signal visuel numérique entrant.

13. Système selon la revendication 11 ou 12 comprenant en outre :
- un composant pour codage numérique d'un signal visuel analogique entrant pour dériver ledit signal visuel numérique entrant.

14. Système selon l'une quelconque des revendications 11 à 13 comprenant en outre :
- un composant pour décrypter ledit signal visuel numérique entrant ou ledit signal visuel analogique entrant.
